# EUROPEAN PATENT APPLICATION

(11) **EP 4 773 206 A1**
(43) Date of publication of application: **08.07.2026**
(21) Application number: 24941348.5
(22) Date of filing: 09.09.2024
(51) Int. Cl.: H01M 4/131, H01M 4/133, H01M 4/525, H01M 4/505, H01M 4/583, H01M 10/0525

(54) **SECONDARY BATTERY AND ELECTRIC DEVICE**

(30) Priority: 29.05.2024 CN 202410676285
(71) Applicant: Contemporary Amperex Technology Co., Limited, Ningde, Fujian 352100 (CN)
(72) Inventor: WU, Kai, Ningde, Fujian 352100 (CN); ZHANG, Xin, Ningde, Fujian 352100 (CN); JIN, Chao, Ningde, Fujian 352100 (CN); YE, Yonghuang, Ningde, Fujian 352100 (CN); ZHENG, Shibing, Ningde, Fujian 352100 (CN); WU, Zirui, Ningde, Fujian 352100 (CN); YAN, Guanfusheng, Ningde, Fujian 352100 (CN); DAI, Zhipeng, Ningde, Fujian 352100 (CN); ZHONG, Ming, Ningde, Fujian 352100 (CN)
(74) Representative: Ziebig Hengelhaupt Intellectual Property Attorneys Patentanwaltskanzlei PartGmbB
(86) International application number: PCT/CN2024/117748
(87) International publication number: WO 2025/246071

(57) **Abstract**

A secondary battery and an electric device. The secondary battery comprises a negative electrode sheet and a positive electrode sheet. The negative electrode sheet comprises a negative electrode film layer, which comprises artificial graphite having a graphitization degree of greater than 93%. The positive electrode sheet comprises a positive electrode film layer, which comprises a positive electrode active material having a single-crystal-particle morphology. On the basis of the total number of moles of nickel, cobalt, and manganese in the chemical formula of the positive electrode active material being 1, the number of moles of nickel in the chemical formula of the positive electrode active material is a, a being 0.6 to 1. The areal density of the negative electrode film layer is σ1, and the areal density of the positive electrode film layer is σ2, where σ1/σ2 is 0.35 to 0.75. The secondary battery has a low expansion force, good cycling performance, and high energy density.

## Description

### CROSS-REFERENCE TO RELATED APPLICATIONS

This application claims priority to the Chinese Patent Application No. 202410676285.4, filed on May 29, 2024 and entitled "SECONDARY BATTERY AND ELECTRIC DEVICE", which is incorporated herein by reference in its entirety.

### TECHNICAL FIELD

This application relates to the technical field of secondary batteries, and in particular, to a secondary battery and an electric device.

### BACKGROUND

In recent years, as the application of secondary batteries becomes increasingly wide, secondary batteries are widely used in energy storage power systems such as hydraulic, thermal, wind, and solar power stations, as well as in fields such as electric tools, electric bicycles, electric motorcycles, and electric vehicles.

Due to the great development of secondary batteries, higher requirements have been posed on the cycling performance and energy density of secondary batteries. Therefore, the pursuit of secondary batteries with good cycling performance and high energy density has become one of the keys focuses for those skilled in the art.

### SUMMARY

This application is conducted in view of the above issues, and one of the objectives thereof is to provide a secondary battery, which generates a low swelling force, exhibits good cycling performance, and has a high energy density.

To achieve the above objective, according to a first aspect of this application, a secondary battery is provided, including a negative electrode sheet and a positive electrode sheet; where
the negative electrode sheet includes a negative electrode film layer, the negative electrode film layer includes a negative electrode active material, and the negative electrode active material includes artificial graphite with a graphitization degree greater than 93%;
the positive electrode sheet includes a positive electrode film layer; the positive electrode film layer includes a positive electrode active material with a morphology of single-crystal particles; and with a total molar amount of nickel element, cobalt element, and manganese element in a chemical formula of the positive electrode active material being 1, a molar amount of nickel element in the chemical formula of the positive electrode active material is a, and a is 0.6 to 1; and
an areal density of the negative electrode film layer is σ1, an areal density of the positive electrode film layer is σ2, and σ1/σ2 is 0.35 to 0.75.

In the above secondary battery, the high-nickel positive electrode active material of single-crystal particles is used in the positive electrode film layer, which has a high charge-discharge specific capacity and can effectively improve the energy density of the battery; moreover, the high-nickel positive electrode active material undergoes lattice contraction in a high SOC (State of Charge) section, which can offset part of swelling force generated by the negative electrode active material, thereby improving the cycling performance of the battery; furthermore, the negative electrode is artificial graphite with a graphitization degree greater than 93%, which has a high charge-discharge specific capacity, and when used with the high-nickel positive electrode active material, can greatly improve the energy density of the battery. Through the cooperation of the above high-nickel positive electrode active material of single-crystal particles and the artificial graphite with high graphitization degree at an appropriate areal density ratio of the positive electrode film layer and negative electrode film layer, the secondary battery generates a low swelling force, exhibits good cycling performance, and has a high energy density.

In any embodiment, 0.85≤a≤0.95. In this way, the positive electrode active material with single-crystal particles has a higher charge-discharge specific capacity, which can further improve the energy density of the battery and further improve the cycling performance of the battery.

In any embodiment, 0.9≤a≤0.95. In this way, the energy density and the cycling performance of the battery can be further improved.

In any embodiment, based on a total mass of the positive electrode active material, a mass percentage of the single-crystal particles is greater than or equal to 80%; optionally, the mass percentage of the single-crystal particles is 100%. In this way, the positive electrode sheet can have a high charge-discharge specific capacity, so that the battery has a high energy density.

In any embodiment, a volume average particle diameter Dᵥ50 of the positive electrode active material of single-crystal particles is 1 µm to 5 µm. In this way, the cycling life of the battery can be effectively improved.

In any embodiment, the positive electrode film layer further includes a positive electrode active material with a morphology of polycrystalline particles, and a volume average particle diameter Dᵥ50 of the positive electrode active material of polycrystalline particles is 5 µm to 15 µm. In this way, using both the positive electrode active material of single-crystal particles and the positive electrode active material of polycrystalline particles can improve the compacted density of the positive electrode film layer, thereby further improving the energy density of the battery.

In any embodiment, based on the total mass of the positive electrode active material, a mass percentage of the positive electrode active material of polycrystalline particles is less than or equal to 80%. In this way, the secondary battery can have a high energy density and exhibit good cycling performance.

In any embodiment, the areal density σ2 of the positive electrode film layer is greater than 13 mg/cm². In this way, a higher areal density of the positive electrode film layer enables the positive electrode sheet to achieve a large compacted density, improving the energy density of the battery.

In any embodiment, the negative electrode active material further includes a silicon-based material; and based on a total mass of the negative electrode active material, a mass percentage of the silicon-based material is 1% to 15%. In this way, while the energy density of the battery is improved, excessive swelling of the negative electrode can be avoided to affect the cycling performance. The battery can exhibit good cycling performance and have a higher energy density.

In any embodiment, the silicon-based material includes a silicon-oxygen material, and a general formula of the silicon-oxygen material is SiO_{y}, where 0.5<y<1.5. In this way, the silicon-oxygen material experiences less volume swelling, helping to improve the cycling performance of the battery.

In any embodiment, the silicon-based material includes pre-lithiated silicon-oxygen particles, and the pre-lithiated silicon-oxygen particles include single-crystal silicon; a diameter of the single-crystal silicon is 0.5 nm to 50 nm; and based on a volume of the pre-lithiated silicon-oxygen particles, a volume percentage of the single-crystal silicon in the pre-lithiated silicon-oxygen particles is 20% to 40%. In this way, the initial Coulombic efficiency of the negative electrode can be improved, reducing lithium loss in an early stage of battery charge and discharge, improving the capacity of the battery.

In any embodiment, the secondary battery further includes an electrolyte solution, and a ratio of a mass of the electrolyte solution to a capacity of the secondary battery is 1.5 g/Ah to 1.9 g/Ah. In this way, the secondary battery has a low amount of electrolyte solution, which can further improve the energy density of the secondary battery.

In any embodiment, the secondary battery is a stacked battery. In this way, the secondary battery is less prone to electrode sheet breakage. Therefore, the battery can operate normally under a greater swelling force compared with a wound secondary battery. In this case, the battery exhibits better cycling performance.

According to a second aspect of this application, an electric device is provided, where the electric device includes the secondary battery in the first aspect of this application.

Details of one or more embodiments of this application are set forth in the following drawings and description. Other features, objectives, and advantages of this application become apparent from the specification, drawings, and claims.

### BRIEF DESCRIPTION OF DRAWINGS

To better describe and illustrate the embodiments or examples provided in this application, reference may be made to one or more drawings. Additional details or examples for describing the drawings should not be construed as limitations to the scope of any of the disclosed application, the embodiments or examples currently described, or the currently understood best mode of these applications. Moreover, in all drawings, the same reference signs denote the same components. In the drawings:
FIG. 1 is a schematic diagram of a battery cell in an embodiment of this application;
FIG. 2 is an exploded view of the battery cell in an embodiment of this application shown in FIG. 1; and
FIG. 3 is a schematic diagram of an electric device using a secondary battery in an embodiment of this application as a power source.

Description of reference signs:
5. battery cell; 51. housing; 52. electrode assembly; 53. cover plate; and 6. electric device.

### DESCRIPTION OF EMBODIMENTS

Hereinafter, embodiments of the secondary battery and electric device of this application are described in detail with appropriate reference to the drawings. However, there may be cases where unnecessary detailed descriptions are omitted. For example, there may be omissions of detailed descriptions of matters that are well known, and repeated descriptions of actually identical structures. This is to avoid the following descriptions from becoming unnecessarily lengthy and to facilitate understanding by those skilled in the art. In addition, the drawings and the following descriptions are provided for those skilled in the art to fully understand this application and are not intended to limit the subject matter described in the claims.

A "scope" disclosed in this application may be defined in the form of a lower limit and an upper limit, and a given scope is defined by selecting a lower limit and an upper limit. The selected lower limit and upper limit define boundaries of a specific scope. The scope defined in this way may include or exclude end values, and any end value may be independently included or excluded, and arbitrary combinations may be included, that is, any lower limit may be combined with any upper limit to form a scope. For example, if ranges of 60 to 120 and 80 to 110 are listed for a specific parameter, it is also contemplated that ranges of 60 to 110 and 80 to 120 are understood. In addition, if the minimum range values 1 and 2 are listed, and if the maximum range values 3, 4, and 5 are also listed, the following ranges can all be contemplated: 1 to 3, 1 to 4, 1 to 5, 2 to 3, 2 to 4, and 2 to 5. In this application, unless otherwise specified, the numerical range "a to b" represents an abbreviated representation of any combination of real numbers between a and b, where both a and b are real numbers. For example, the numerical range "0 to 5" represents that all real numbers between "0 to 5" have been fully listed in this text, and "0 to 5" is just an abbreviated representation of these numerical combinations. In addition, when a parameter is expressed as an integer greater than or equal to 2, it means that the parameter is listed as, for example, an integer such as 2, 3, 4, 5, 6, 7, 8, 9, 10, 11, 12, or the like. For example, when a parameter is expressed as an integer selected from "2 to 10", it means that integers 2, 3, 4, 5, 6, 7, 8, 9, and 10 are listed.

Terms such as "multiple" and "multiple types" in this application, if not specifically limited, refer to greater than 2 or equal to 2 in number. For example, "one or more types" means one type or greater than or equal to two types.

If not specifically stated, all embodiments and optional embodiments of this application can be combined with each other to form a new technical solution.

As used herein, reference to "an embodiment" means that a particular feature, structure, or characteristic described with reference to the embodiment can be included in at least one embodiment or implementation of this application. The appearance of the phrase in various places in the specification does not necessarily refer to the same embodiment, nor is it an independent or alternative embodiment that is mutually exclusive with other embodiments. Those skilled in the art will explicitly and implicitly understand that the embodiments described herein can be combined with other embodiments. Reference to "an implementation" herein has a similar understanding.

Those skilled in the art can understand that in the methods of various implementations or embodiments, the writing order of the steps does not mean a strict execution order and does not impose any limitation on the implementation process, and the detailed execution order of the steps should be determined by their functions and possible inherent logic. If not specifically stated, all steps of this application can be performed sequentially or randomly, and preferably sequentially. For example, the method includes steps (a) and (b), indicating that the method may include steps (a) and (b) performed sequentially, or may include steps (b) and (a) performed sequentially. For example, the mentioned method may further include step (c), indicating that step (c) can be added to the method in any order, for example, the method may include steps (a), (b), and (c), or may include steps (a), (c), and (b), or may include steps (c), (a), and (b), or the like.

In this application, in open technical features or technical solutions described with words such as "contain" "include" and "comprise", if not otherwise specified, additional members other than the listed members are not excluded, and it can be regarded as providing both closed features or solutions formed by the listed members and open features or solutions that include additional members other than the listed members. For example, A includes a1, a2, and a3, if not otherwise specified, it may also include other members or may not include additional members, and it can be regarded as providing both the feature or solution of "A is formed by a1, a2, and a3" and the feature or solution of "A includes not only a1, a2, and a3, but also other members". In this application, if not otherwise specified, A (such as B) means that B is a non-limiting example of A, and it can be understood that A is not limited to B.

In this application, "optionally", "optional" and the like mean "non-mandatory", meaning either of the two parallel solutions of "presence" or "absence". If "optional" appear in a technical solution multiple times, if not specifically stated, and there is no contradiction or mutual restriction, each "optional" item is independent.

Currently, due to the great development of secondary batteries, higher requirements have been posed on the cycling performance and energy density of secondary batteries. Therefore, the pursuit of secondary batteries with good cycling performance and high energy density has become one of the keys focuses for those skilled in the art.

In some embodiments, according to a first aspect of this application, a secondary battery is provided, where the secondary battery includes a negative electrode sheet and a positive electrode sheet; the negative electrode sheet includes a negative electrode film layer, the negative electrode film layer includes a negative electrode active material, and the negative electrode active material includes artificial graphite with a graphitization degree greater than 93%; the positive electrode sheet includes a positive electrode film layer, and the positive electrode film layer includes a positive electrode active material with a morphology of single-crystal particles; with a total molar amount of nickel element, cobalt element, and manganese element in a chemical formula of the positive electrode active material being 1, a molar amount of nickel element in the chemical formula of the positive electrode active material is a, and a is 0.6 to 1; and an areal density of the negative electrode film layer is σ1, an areal density of the positive electrode film layer is σ2, and σ1/σ2 is 0.35 to 0.75.

In the above secondary battery of this application, the high-nickel positive electrode active material of single-crystal particles is used in the positive electrode film layer, which has a high charge-discharge specific capacity and can effectively improve the energy density of the battery; moreover, the high-nickel positive electrode active material undergoes lattice contraction in a high SOC section, which can offset part of swelling force generated by the negative electrode active material, so that the battery does not experience situation that the electrolyte solution is forced out of the electrode sheet, the electrode solution flow in the electrode sheet is blocked, or other situations under a large negative electrode swelling force, thereby alleviating the situation of accelerated battery capacity decay due to negative electrode swelling and improving the cycling performance of the battery; furthermore, the negative electrode is artificial graphite with a high graphitization degree greater than 93%, which has a high charge-discharge specific capacity, and when used with the high-nickel positive electrode active material, can greatly improve the energy density of the battery. Through the cooperation of the above high-nickel positive electrode active material of single-crystal particles and the artificial graphite with high graphitization degree at an appropriate areal density ratio of the positive electrode film layer and negative electrode film layer, the secondary battery generates a low swelling force, exhibits good cycling performance, and has a high energy density.

It should be noted that the graphitization degree is an indicator to measure a degree to which carbon atoms in graphite form a close-packed hexagonal graphite crystal structure. A lattice size of graphite closer to a lattice constant of ideal graphite has a higher graphitization degree. The graphitization degree may be measured by X-ray diffraction method, that is, an interlayer spacing d002 of the graphite (002) crystal plane is first measured, and then substituted into the Mering-Maire formula (Franklin formula) to calculate the graphitization degree. The graphitization degree can reflect properties such as structural orderliness and electrical conductivity of graphite materials.

It can be understood that the ratio σ1/σ2 of the areal density σ1 of the negative electrode film layer to the areal density σ2 of the positive electrode film layer may be any value in the range defined by any two of the above values such as 0.35, 0.45, 0.6, 0.65, 0.7, and 0.75.

In some embodiments, a molar amount of Ni in the chemical formula of the above positive electrode active material is 0.85≤a≤0.95. In this way, the high-nickel positive electrode active material of single-crystal particles is used in the positive electrode film layer, which has a higher charge-discharge specific capacity and can further improve the energy density of the battery. Moreover, it undergoes significant lattice contraction in the high SOC section, which can better offset the negative electrode swelling force and further improve the cycling performance of the battery.

In some embodiments, the molar amount of Ni in the chemical formula of the above positive electrode active material is 0.9≤a≤0.95. Using single-crystal particles with Ni molar amount of 0.9 to 0.95 can further improve the energy density of the battery, and these single-crystal particles undergo significant lattice contraction compared with other positive electrode active materials (such as lithium iron phosphate and ternary materials with lower Ni content), and its lattice contraction in the high SOC section can reach 5%, which can further improve the cycling performance of the battery.

In some embodiments, based on a total mass of the positive electrode active material, a mass percentage of the single-crystal particles is greater than or equal to 80%, optionally, the mass percentage of the single-crystal particles is 100%. In this way, the positive electrode sheet can have a high charge-discharge specific capacity, so that the battery has a high energy density.

In some embodiments, a volume average particle diameter Dᵥ50 of the positive electrode active material of single-crystal particles is 1 µm to 5 µm. The positive electrode active material of single-crystal particles whose volume average particle diameter Dᵥ50 is between 1 µm to 5 µm has a more stable structure, and does not undergo particle breakage under large negative electrode swelling force, effectively improving the cycling life of the battery. It can be understood that the positive electrode active material of single-crystal particles is a material formed by single crystals. The volume average particle diameter Dᵥ50 of the positive electrode active material of single-crystal particles may be 1 µm, 1.2 µm, 1.5 µm, 1.8 µm, 2 µm, 2.2 µm, 2.5 µm, 2.8 µm, 3 µm, 3.2 µm, 3.5 µm, 3.8 µm, 4 µm, 4.2 µm, 4.5 µm, 4.8 µm, and 5 µm, or any value in the range defined by any two of the above values.

In some embodiments, the positive electrode film layer further includes a positive electrode active material with a morphology of polycrystalline particles. In other words, the positive electrode film layer includes both the positive electrode active material of single-crystal particles and the positive electrode active material of polycrystalline particles. Using the positive electrode active material with blending single-crystal particles and polycrystalline particles in the positive electrode film layer can improve the compacted density of the positive electrode, thereby further improving the energy density of the battery.

In some embodiments, the volume average particle diameter Dᵥ50 of the positive electrode active material of the polycrystalline particles is 5 µm to 15 µm. The positive electrode active material of polycrystalline particles is secondary particles formed by multiple single-crystal particles, and a particle diameter is larger than that of single-crystal particle. It can be understood that the volume average particle diameter Dᵥ50 of the positive electrode active material of polycrystalline particles may be 5 µm, 6 µm, 7 µm, 8 µm, 9 µm, 10 µm, 11 µm, 12 µm, 13 µm, 14 µm, and 15 µm, or any value in the range defined by any two of the above values.

In some embodiments, based on the total mass of the positive electrode active material in the positive electrode film layer, a mass percentage of the positive electrode active material of the polycrystalline particles is less than or equal to 80%. Although blending the positive electrode active material of a certain amount of polycrystalline particles in the positive electrode film layer can improve the positive electrode compacted density, and the positive electrode active material of the polycrystalline particles also has a high charge-discharge specific capacity, the positive electrode active material of polycrystalline particles is prone to cracks under the action of large negative electrode swelling force, which has a certain impact on the cycling performance of the battery. Therefore, in view of this, the mass percentage of the positive electrode active material of polycrystalline particles is within 80%. It can be understood that the mass percentage of the positive electrode active material of polycrystalline particles may be 0%, 10%, 20%, 30%, 40%, 50%, 60%, 70%, and 80%, or any value in the range defined by any two of the above values. Further, the mass percentage of the positive electrode active material of polycrystalline particles is less than or equal to 20%.

In some embodiments, the areal density of the positive electrode film layer is greater than 13 mg/cm². The areal density of the positive electrode film layer in the positive electrode sheet is greater than 13 mg/cm², so that the positive electrode sheet has a large compacted density, which can improve the energy density of the battery.

In some embodiments, the artificial graphite of the negative electrode active material includes large-particle graphite and small-particle graphite, where a volume average particle diameter Dᵥ50 of the large-particle graphite is d1, where 18 µm≤d1≤24 µm; and a volume average particle diameter Dᵥ50 of the small-particle graphite is d2, where 0.4d1<d2<0.9d1. Using both large-particle graphite and small-particle graphite can improve the compacted density of the negative electrode sheet, thereby improving the energy density of the battery.

It can be understood that the volume average particle diameter Dᵥ50 d1 of the large-particle graphite may be 18 µm, 18.2 µm, 18.5 µm, 18.8 µm, 19 µm, 19.2 µm, 19.5 µm, 19.8 µm, 20 µm, 20.2 µm, 20.5 µm, 20.8 µm, 21 µm, 21.2 µm, 21.5 µm, 21.8 µm, 22 µm, 22.2 µm, 22.5 µm, 22.8 µm, 23 µm, 23.2 µm, 23.5 µm, 23.8 µm, and 24 µm, or any value in the range defined by any two of the above values; and the volume average particle diameter Dᵥ50 d2 of the small-particle graphite may be 0.4d1, 0.45d1, 0.5d1, 0.55d1, 0.6d1, 0.65d1, 0.7d1, 0.75d1, 0.8d1, 0.85d1, and 0.9d1, or any value in the range defined by any two of the above values.

In some embodiments, based on a total mass of the artificial graphite, a mass percentage of the large-particle graphite is e1, where 0%<e1≤40%, and a mass percentage of the small-particle graphite is e2, where 40%≤e2<100%. Using the large-particle graphite and the small-particle graphite based on the above mass percentages helps improve the compacted density of the negative electrode sheet and improve the energy density of the battery.

It can be understood that the mass percentage e1 of the large-particle graphite may be 1%, 5%, 8%, 10%, 12%, 15%, 18%, 20%, 22%, 25%, 28%, 30%, 32%, 35%, 38%, and 40%, or any value in the range defined by any two of the above values; and the mass percentage e2 of the small-particle graphite may be 40%, 45%, 50%, 55%, 60%, 65%, 70%, 75%, 80%, 85%, 90%, 95%, and 100%, or any value in the range defined by any two of the above values.

In some embodiments, the negative electrode active material in the negative electrode film layer further includes a silicon-based material; and based on a total mass of the negative electrode active material, a mass percentage of the silicon-based material is 1% to 15%. Compared with a graphite material, the silicon-based material has a higher charge-discharge specific capacity. By using a certain amount of silicon-based material in the negative electrode film layer, the energy density of the battery can be further improved. However, the silicon-based material greatly experiences significant volume swelling during charge and discharge, and setting the mass percentage of the silicon-based material in the negative electrode active material to the range of 1% to 15% can improve the energy density of the battery while avoiding excessive negative electrode swelling that affects the cycling performance.

It can be understood that the mass percentage of the silicon-based material in the negative electrode active material may be 1%, 2%, 3%, 4%, 5%, 6%, 7%, 8%, 9%, 10%, 11%, 12%, 13%, 14%, and 15%, or any value in the range defined by any two of the above values.

In some embodiments, the volume average particle diameter Dᵥ50 of the silicon-based material in the negative electrode film layer is d3, where 0.15d1≤d3≤0.5d1. Using a silicon-based material with a particle diameter smaller than large-particle graphite can further improve the compacted density of the negative electrode sheet and improve the energy density of the battery; moreover, a silicon-based material with a small particle diameter better facilitates the diffusion of lithium ions in the negative electrode film layer, which helps improve the kinetics of the battery.

It can be understood that the volume average particle diameter Dᵥ50 of the silicon-based material in the negative electrode film layer may be 0.15d1, 0.18d1, 0.20d1, 0.22d1, 0.25d1, 0.28d1, 0.30d1, 0.32d1, 0.35d1, 0.38d1, 0.40d1, 0.42d1, 0.45d1, 0.48d1, and 0.5d1, or any value in the range defined by any two of the above values.

In some embodiments, the silicon-based material includes a silicon-oxygen material, and a general formula of the silicon-oxygen material is SiO_{y}, where 0.5<y<1.5. Compared with using elemental silicon as the silicon-based material, the silicon-oxygen material of the above general formula experiences less volume swelling during charge and discharge, reducing the swelling force of the battery, thereby improving the cycling performance of the battery. Further, the volume average particle diameter Dᵥ50 of the silicon-oxygen material is 2 µm to 8 µm, a volume average particle diameter Dᵥ10 is 0.5 µm to 3 µm, and a specific surface area is 1 m²/g to 1.5 m²/g.

It should be noted that, in the early stage of secondary battery use, an overhang region of the negative electrode sheet does not undergo significant lithium intercalation reaction, and the negative electrode film layer in this region is close to an initial powder state. After disassembling the secondary battery, whether the negative electrode film layer in the overhang region includes the silicon-oxygen material can be observed through nuclear magnetic resonance or XRD, thereby determining whether the silicon-based material in the negative electrode film layer includes the silicon-oxygen material. Herein, the overhang region in the negative electrode sheet refers to a part of the negative electrode sheet that exceeds the positive electrode sheet in length and width directions.

In some embodiments, the silicon-based material includes pre-lithiated silicon-oxygen particles, and the pre-lithiated silicon-oxygen particles include single-crystal silicon. A diameter of the single-crystal silicon is 0.5 nm to 50 nm; and based on a volume of the pre-lithiated silicon-oxygen particles, a volume percentage of the single-crystal silicon in the pre-lithiated silicon-oxygen particles is 20% to 40%. By using a pre-lithiated silicon-oxygen material, the initial Coulombic efficiency of the negative electrode can be improved, reducing lithium loss in the early stage of battery charge and discharge, ensuring a high capacity of the battery. Setting the diameter of the single-crystal silicon in the pre-lithiated silicon-oxygen particles to 0.5 nm to 50 nm, and the volume percentage of the single-crystal silicon to 20% to 40%, can improve the cycling stability and kinetics of the negative electrode active material, mitigating the volume swelling of the negative electrode active material, accelerating the diffusion of Li ions, and thereby improving the negative electrode capacity. It should be noted that the diameter of the single-crystal silicon in the pre-lithiated silicon-oxygen particles refers to a cluster size of the single-crystal silicon, that is, the maximum diameter of a single-crystal silicon cluster. The maximum diameter may be measured by using software based on silicon distribution and size observed with the cross-section CP in the backscattered electron mode.

In some embodiments, the pre-lithiated silicon-oxygen particles satisfy the following general formula: nSi·mLi₂SiO₃; where n and m are both positive numbers, and 0.8<n/m<1.2.

In some embodiments, the secondary battery further includes an electrolyte solution, and a ratio of a mass of the electrolyte solution to the capacity of the secondary battery is 1.5 g/Ah to 1.9 g/Ah. In this way, the secondary battery has a small amount of the electrolyte solution, an electrode sheet with a high compacted density, highly graphitized graphite, and high-nickel positive electrode active material, which can further improve the energy density of the secondary battery. It can be understood that the ratio of the electrolyte solution to the capacity of the secondary battery may be 1.5 g/Ah, 1.52 g/Ah, 1.55 g/Ah, 1.58 g/Ah, 1.6 g/Ah, 1.62 g/Ah, 1.65 g/Ah, 1.68 g/Ah, 1.7 g/Ah, 1.72 g/Ah, 1.75 g/Ah, 1.78 g/Ah, 1.8 g/Ah, 1.82 g/Ah, 1.85 g/Ah, 1.88 g/Ah, or 1.9 g/Ah, or any value in the range defined by any two of the above values. Herein, ratio of electrolyte solution to capacity of secondary battery (g/Ah)=amount of electrolyte solution (g)/capacity of secondary battery (Ah).

In some embodiments, the secondary battery is a stacked battery. In severe negative electrode swelling of the battery, the electrode sheet is prone to breakage due to stretching caused by swelling. In a wound secondary battery, stress concentration is more likely to occur at a corner of the electrode sheet, easily leading to cracking of the electrode sheet at the corner; whereas in a stacked secondary battery, since both the positive and negative electrodes have no corner structures, the main stress direction of the electrode sheets is a large surface direction of the electrode sheets, and electrode sheet breakage is less likely to occur. Therefore, a stacked secondary battery can operate normally under a greater swelling force compared with a wound secondary battery.

In some embodiments, a second aspect of this application further provides an electric device, where the electric device includes the secondary battery in the first aspect of this application.

The secondary battery and electric device in this application are described below with appropriate reference to the drawings.

In an embodiment of this application, a secondary battery is provided.

Typically, the secondary battery includes a positive electrode sheet, a negative electrode sheet, an electrolyte, and a separator. During the charge and discharge of the battery, active ions intercalate into and deintercalate from the positive electrode sheet and the negative electrode sheet, and the electrolyte conducts ions between the positive electrode sheet and the negative electrode sheet. The separator is provided between the positive electrode sheet and the negative electrode sheet, mainly to prevent short circuit between the positive electrode and negative electrode, and allows passage of ions.

### Positive electrode sheet

The positive electrode sheet includes a positive electrode current collector and a positive electrode film layer provided on at least one surface of the positive electrode current collector, and the positive electrode film layer includes a positive electrode active material.

As a non-limiting example, the positive electrode current collector has two opposite surfaces in a thickness direction of the positive electrode current collector, and the positive electrode film layer is provided on either or both of the two opposite surfaces of the positive electrode current collector.

In some embodiments, the positive electrode current collector may be a metal foil or a composite current collector. For example, the metal foil may be an aluminum foil. The composite current collector may include a polymer material base layer and a metal layer formed on at least one surface of the polymer material base layer. The composite current collector may be obtained by forming a metal material on a polymer material substrate. In the positive electrode current collector, a non-limiting example of the metal material may include one or more of aluminum, aluminum alloy, nickel, nickel alloy, titanium, titanium alloy, silver, and silver alloy. In the positive electrode current collector, a non-limiting example of the polymer material substrate may include one or more of substrates such as polypropylene (PP), polyethylene terephthalate (PET), polybutylene terephthalate (PBT), polystyrene (PS), polyethylene (PE), and the like.

In some embodiments, the positive electrode active material includes a positive electrode active material with a morphology of single-crystal particles and a chemical formula of Liₓ(NiₐCo_{b}Mn_{c})_{1-d}M_{d}O_{2-y}A_{y}; where 0.2≤x≤1.2, 0.6≤a≤1, 0<b≤0.2, 0<c≤0.4, 0≤d<1, and 0≤y<2, M includes at least one of Al, Mg, Fe, Cu, V, Ti, Zr, W, Sb, Dy, and Te, and A includes at least one of P, S, and halogen.

It can be understood that during the charge and discharge of the battery, lithium (Li) deintercalation and consumption occur, and a content of Li in the positive electrode sheet varies as the battery is discharged to a different state. In the enumeration of positive electrode materials in this application, if not otherwise specified, the content of Li is that of a material in an initial state. When the positive electrode material is applied to the positive electrode sheet in the battery system, after charge and discharge cycles, the content of Li in the positive electrode material contained in the electrode sheet usually changes. Herein, the content of Li may be measured by molar amount, but is not limited thereto. In the description "the content of Li is that of a material in an initial state", the initial state of the material refers to a state before the material is added to the positive electrode slurry. It can be understood that a new material obtained through appropriate modification based on the listed positive electrode material is also within the scope of positive electrode material, and the aforementioned appropriate modification refers to acceptable modification methods for positive electrode material, and a non-limiting example is coating modification.

In the enumeration of the positive electrode material in this application, a content of oxygen (O) is only a theoretical state value, and lattice oxygen release causes changes in the molar amount of oxygen, so the actual content of O fluctuates. Herein, the content of O may be measured by molar amount, but is not limited thereto.

A weight ratio of the positive electrode active material in the positive electrode film layer is 80wt% to 100wt%, based on a total weight of the positive electrode film layer.

In some embodiments, the positive electrode film layer may further optionally include a binder. As a non-limiting example, the binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin. A weight ratio of the binder in the positive electrode film layer is 0wt% to 20wt%, based on a total weight of the positive electrode film layer.

In some embodiments, the positive electrode film layer may further optionally include a conductive agent. As a non-limiting example, the conductive agent may include one or more of superconducting carbon, acetylene black, carbon black, Ketjen black, carbon dots, carbon nanotubes, graphene, and carbon nanofibers. A weight ratio of the conductive agent in the positive electrode film layer is 0wt% to 20wt%, based on a total weight of the positive electrode film layer.

In some embodiments, the positive electrode sheet may be prepared by using the following method: the above components for preparing the positive electrode sheet, such as the positive electrode active material, conductive agent, binder, and any other components, are dispersed in a solvent (for example, N-methylpyrrolidone) to form a positive electrode slurry, where a solid content of the positive electrode slurry is 40wt% to 80wt%, and a viscosity at room temperature is adjusted to 5000 mPa·s to 25000 mPa·s. The positive electrode slurry is applied to a surface of the positive electrode current collector, dried, and then cold-pressed by a cold rolling mill to form the positive electrode sheet. A compacted density of the positive electrode sheet may be 3.3 g/cm³ to 3.7 g/cm³.

A calculation formula of the compacted density is:
compacted density=double-sided coating areal density/(electrode sheet thickness after extrusion-current collector thickness).

A mass M of a positive electrode active substance in the positive electrode film layer per unit area may be obtained through weighing with a standard balance.

A thickness T of the positive electrode film layer may be measured using a micrometer, for example, a micrometer Mitutoyo293-100 with an accuracy of 0.1 µm can be used for measurement. It should be noted that the thickness of the positive electrode film layer described in this application refers to a thickness of the positive electrode film layer in the positive electrode sheet that is cold pressed and used for battery assembly.

### Negative electrode sheet

The negative electrode sheet includes a negative electrode current collector and a negative electrode film layer provided on at least one surface of the negative electrode current collector, and the negative electrode film layer includes a negative electrode active material.

As a non-limiting example, the negative electrode current collector has two opposite surfaces in a thickness direction of the negative electrode current collector, and the negative electrode film layer is provided on either or both of the two opposite surfaces of the negative electrode current collector.

In some embodiments, the negative electrode current collector may be a metal foil or a composite current collector. For example, the metal foil may be a copper foil. The composite current collector may include a polymer material base layer and a metal layer formed on at least one surface of the polymer material substrate. The composite current collector may be obtained by forming a metal material on a polymer material substrate. Herein, in the negative electrode current collector, a non-limiting example of the metal material may include one or more of copper, copper alloy, nickel, nickel alloy, titanium, titanium alloy, silver, and silver alloy. In the negative electrode current collector, a non-limiting example of the polymer material substrate may include one or more of substrates such as polypropylene (PP), polyethylene terephthalate (PET), polybutylene terephthalate (PBT), polystyrene (PS), polyethylene (PE), and the like.

In some embodiments, the negative electrode active material includes artificial graphite with a graphitization degree greater than 93%. In addition, a silicon-based material may also be included. The silicon-based material may include one or more of elemental silicon, silicon oxide, silicon-carbon composite, silicon-nitrogen composite, and silicon alloy. In some specific examples, the silicon-based material may be a silicon-oxygen material or pre-lithiated silicon-oxygen particles.

In some embodiments, the negative electrode film layer may further optionally include a binder. The binder may include one or more of styrenebutadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer may further optionally include a conductive agent. The conductive agent may include one or more of superconducting carbon, acetylene black, carbon black, Ketjen black, carbon dots, carbon nanotubes, graphene, and carbon nanofibers.

In some embodiments, the negative electrode film layer may further optionally include other auxiliaries, such as thickener (such as sodium carboxymethyl cellulose (CMC-Na)).

In some embodiments, the negative electrode sheet may be prepared by using the following method: the above components for preparing the negative electrode sheet, such as the negative electrode active material, conductive agent, binder, and any other components, are dispersed in a solvent (a non-limiting example of the solvent is deionized water) to form a negative electrode slurry; the negative electrode slurry is applied to at least one side surface of the negative electrode current collector; and after processes such as drying and cold pressing, the negative electrode sheet can be obtained. The surface of the negative electrode current collector coated with the negative electrode slurry may be a single surface of the negative electrode current collector or both surfaces of the negative electrode current collector. A solid content of the negative electrode slurry may be 40wt% to 60wt%. A viscosity of the negative electrode slurry at room temperature may be adjusted to 2000 mPa·s to 10000 mPa·s.

### Electrolyte

The electrolyte is capable of conducting ions between the positive electrode sheet and the negative electrode sheet. A type of the electrolyte is not particularly limited in this application, and it can be determined according to needs. For example, the electrolyte may be liquid, gel, or all-solid-state.

In some embodiments, the electrolyte is an electrolyte solution. The electrolyte solution includes an electrolyte salt and a solvent.

In some embodiments, the electrolyte salt of the lithium-ion secondary battery may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluoro bis(oxalato)phosphate (LiDFOP), and lithium tetrafluoro(oxalato)phosphate (LiTFOP).

In some embodiments, the solvent may include one or more of fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfone (MSM), ethyl methyl sulfone (EMS), and diethyl sulfone (ESE).

In some embodiments, the electrolyte solution may further optionally include an additive. For example, the additive may include a negative electrode film-forming additive, a positive electrode film-forming additive, and also additives that can improve certain performance of the battery, such as additives that improve overcharge performance of the battery, a high or low temperature performance of the battery, and the like.

In some embodiments, the additive in the electrolyte solution may include, but is not limited to, one or more of fluoroethylene carbonate (FEC), difluoroethylene carbonate (DFEC), trifluoromethyl ethylene carbonate (TFPC), and the like.

### Separator

In some embodiments, the secondary battery further includes a separator. A type of the separator is not particularly limited in this application, and any well-known porous-structure separator with good chemical stability and mechanical stability can be used.

In some embodiments, the material of the separator may include one or more of glass fiber, non-woven fabric, polyethylene, polypropylene, and polyvinylidene fluoride. The separator may be a single-layer film or a multi-layer composite film, and this is not particularly limited. When the separator is a multi-layer composite film, materials of the layers may be the same or different, and this is not particularly limited.

In some embodiments, a thickness of the separator is 6 µm to 40 µm, optionally 12 µm to 20 µm.

In some embodiments, the positive electrode sheet, negative electrode sheet, and separator may be made into an electrode assembly through winding or stacking.

In some embodiments, the secondary battery may include an outer package. The outer package may be used to encapsulate the above electrode assembly and electrolyte.

In some embodiments, the outer package of the secondary battery may be a hard shell, such as a hard plastic shell, aluminum shell, or steel shell. The outer package of the secondary battery may alternatively be a soft package, such as a pouch. A material of the soft package may be plastic, and further, a non-limiting example of the plastic may include one or more of polypropylene, polybutylene terephthalate, polybutylene succinate, and the like.

The secondary battery includes at least one battery cell. The secondary battery may include one or more battery cells.

In this application, unless otherwise specified, "battery cell" refers to a basic unit that can achieve conversion between chemical energy and electrical energy, and further, typically includes at least a positive electrode sheet, a negative electrode sheet, and an electrolyte. During the charge and discharge of the battery, active ions intercalate into and deintercalate from the positive electrode sheet and the negative electrode sheet. The electrolyte conducts active ions between the positive electrode sheet and the negative electrode sheet.

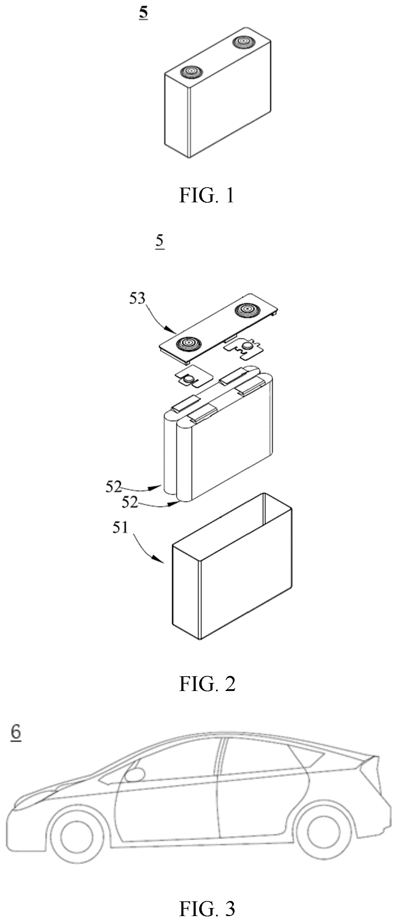

A shape of the battery cell is not particularly limited in this application, which may be cylindrical or prismatic, or in any other shape. For example, FIG. 1 is an example battery cell 5 with a prismatic structure.

In some embodiments, with reference to FIG. 2, an outer package may include a housing 51 and a cover plate 53. The housing 51 may include a bottom plate and a side plate connected to the bottom plate, and the bottom plate and the side plate enclose an accommodating cavity. The housing 51 has an opening communicating with the accommodating cavity, and the cover plate 53 can cover the opening to close the accommodating cavity. The positive electrode sheet, negative electrode sheet, and separator may form an electrode assembly 52 through winding or stacking. The electrode assembly 52 is encapsulated in the accommodating cavity. The electrolyte solution infiltrates into the electrode assembly 52. One or more electrode assemblies 52 may be contained in the battery cell 5, and those skilled in the art can determine the quantity according to specific actual needs.

In some embodiments, the battery cell 5 may be assembled into a battery module, and one or more battery cells 5 may be contained in the battery module. A specific quantity may be determined by those skilled in the art according to the application and capacity of the battery module.

In the battery module, multiple battery cells 5 may be arranged sequentially along a length direction of the battery module. Certainly, they may alternatively be arranged in any other manner. Further, the multiple battery cells 5 can be fastened by fasteners.

Optionally, the battery module may further include a casing with an accommodating space, and multiple battery cells 5 are accommodated in the accommodating space.

In some embodiments, the above battery module may alternatively be assembled into a battery pack, and one or more battery modules may be contained in the battery pack. A specific quantity may be determined by those skilled in the art according to the application and capacity of the battery pack.

The battery pack may include a battery box and multiple battery modules provided in the battery box. The battery box includes an upper box body and a lower box body, and the upper box body may cover the lower box body to form a closed space for accommodating the battery modules. Multiple battery modules may be arranged in the battery box in any manner.

In addition, this application further provides an electric device. The electric device includes at least one of the secondary battery, battery module, or battery pack provided in this application. The secondary battery, battery module, or battery pack may be used as a power source of the electric device or as an energy storage unit of the electric device. The electric device may include a mobile device (such as a mobile phone and notebook computer), electric vehicle (such as pure electric vehicle, hybrid electric vehicle, plug-in hybrid electric vehicle, electric bicycle, electric scooter, electric golf cart, and electric truck), electric train, ship, satellite, energy storage system, and the like, but is not limited thereto.

For the electric device, the secondary battery, battery module, or battery pack may be selected according to usage needs.

FIG. 3 is an example electric device 6. The electric device is a pure electric vehicle, hybrid electric vehicle, plug-in hybrid electric vehicle, or the like. To satisfy requirements of the electric device for high power and high energy density of the secondary battery, a battery pack or battery module can be used.

As another example, the device may be a mobile phone, tablet computer, notebook computer, or the like. Such a device usually needs to be light and thin, and a secondary battery may be used as a power source.

The following are some examples.

In order to make the technical problems solved by this application, the technical solutions, and the beneficial effects clearer, this application is further described in detail below with reference to the embodiments and drawings. It is clear that the described embodiments are only some but not all embodiments of this application. The following description of at least one illustrative example is actually only for explanation and is never intended as any limitation to this application and its application. Based on the examples in this application, all other embodiments obtained by those of ordinary skill in the art without creative effort belong to the protection scope of this application.

For techniques or conditions not specified in the examples, techniques or conditions described in the literature in the field or according to product instructions are followed. Reagents or instruments not specified by manufacturers are all conventional products that can be purchased commercially.

### I. Examples and comparative examples

### Example 1

### (1) Preparation of positive electrode sheet

A positive electrode active material of single-crystal particles Li_{1.02}(Ni_{0.75}Co_{0.12}Mn_{0.13})_{0.98}O₂, conductive carbon black Super P, single-walled carbon nanotubes, and binder PVDF were mixed to uniformity in a mass ratio of 97:1.5:0.5:1 in solvent N-methylpyrrolidone (NMP) to obtain a positive electrode slurry; the positive electrode slurry was applied to a positive electrode current collector aluminum foil; and through processes such as drying, cold pressing, slitting, and cutting, a positive electrode sheet was obtained. A compacted density of the positive electrode sheet was 3.3 g/cm³; an areal density of the positive electrode film layer was 20 mg/cm²; and a volume average particle diameter Dᵥ50 of the positive electrode active material of single-crystal particles was 2.5 µm.

### (2) Preparation of negative electrode sheet

Negative electrode active material artificial graphite, conductive carbon black, and polyacrylic acid binder were mixed to uniformity in a mass ratio of 96:2:2 in an appropriate amount of solvent deionized water to obtain a negative electrode slurry; the negative electrode slurry was applied to a negative electrode current collector copper foil; and through processes such as drying, cold pressing, slitting, and cutting, a negative electrode sheet was obtained.

An areal density of the negative electrode film layer was 12 mg/cm². A graphitization degree of the artificial graphite was 94%, where the artificial graphite included large-particle graphite and small-particle graphite, a volume average particle diameter Dᵥ50 of the large-particle graphite was 21 µm, a volume average particle diameter Dᵥ50 of the small-particle graphite was 15 µm, a mass percentage of the large-particle graphite in the graphite was 50%, and a mass percentage of the small-particle graphite was 50%.

### (3) Preparation of electrolyte solution

EC, DMC, and EMC were mixed in a volume ratio of 3:5:2 to obtain an organic solvent, and fully dried LiPF₆ was dissolved in the above organic solvent to prepare an electrolyte solution with a concentration of 1 mol/L.

### (4) Separator

A PE separator with a thickness of 12 µm was used as the separator.

### (5) Preparation of secondary battery

The positive electrode sheet, separator, and negative electrode sheet were stacked in sequence to obtain an electrode assembly; the electrode assembly was placed in an outer package; after drying, the electrolyte solution was injected; and through processes such as vacuum packaging, standing, formation, and shaping, a secondary battery was obtained. A ratio of a mass of the electrolyte solution in the secondary battery to a capacity of the secondary battery was 1.7 g/Ah.

### Example 2

This example was basically the same as Example 1, and the differences were that the chemical formula of the positive electrode active material of single-crystal particles was Li_{1.02}(Ni_{0.85}Co_{0.07}Mn_{0.08})_{0.98}O₂, and the areal density of the negative electrode film layer was 13 mg/cm².

### Example 3

This example was basically the same as Example 1, and the differences were that the chemical formula of the positive electrode active material of single-crystal particles was Li_{1.02}(Ni_{0.90}Co_{0.07}Mn_{0.03})_{0.98}O₂, and the areal density of the negative electrode film layer was 14 mg/cm².

### Example 4

This example was basically the same as Example 1, and the differences were that the chemical formula of the positive electrode active material of single-crystal particles was Li_{1.02}(Ni_{0.95}Co_{0.04}Mn_{0.01})_{0.98}O₂, and the areal density of the negative electrode film layer was 15 mg/cm².

### Example 5

This example was basically the same as Example 3, and the only difference was that the volume average particle diameter Dᵥ50 of the positive electrode active material of single-crystal particles was 1 µm.

### Example 6

This example was basically the same as Example 3, and the only difference was that the volume average particle diameter Dᵥ50 of the positive electrode active material of single-crystal particles was 5 µm; accordingly, the compacted density of the positive electrode sheet was 3.5 g/cm³.

### Example 7

This comparative example was basically the same as Example 1, and the only difference was that the compacted density of the positive electrode sheet was 2.8 g/cm³.

### Example 8

This example was basically the same as Example 3, and the differences were that the positive electrode film layer further included a positive electrode active material of polycrystalline particles; based on the total mass of the positive electrode active material, a mass percentage of the positive electrode active material of polycrystalline particles was 20%, and a mass percentage of the positive electrode active material of single-crystal particles was 80%; the volume average particle diameter Dᵥ50 of the positive electrode active material of polycrystalline particles was 10 µm; and the compacted density of the positive electrode sheet was 3.6 g/cm³.

### Example 9

This example was basically the same as Example 3, and the differences were that the positive electrode film layer further included a positive electrode active material of polycrystalline particles; based on the total mass of the positive electrode active material, a mass percentage of the positive electrode active material of polycrystalline particles was 50%, and a mass percentage of the positive electrode active material of single-crystal particles was 50%; the volume average particle diameter Dᵥ50 of the positive electrode active material of polycrystalline particles was 10 µm; and the compacted density of the positive electrode sheet was 3.5 g/cm³.

### Example 10

This example was basically the same as Example 3, and the only differences were that the positive electrode film layer further included a positive electrode active material of polycrystalline particles; based on the total mass of the positive electrode active material, a mass percentage of the positive electrode active material of polycrystalline particles was 80%, and a mass percentage of the positive electrode active material of single-crystal particles was 20%; the volume average particle diameter Dᵥ50 of the positive electrode active material of polycrystalline particles was 10 µm; and the compacted density of the positive electrode sheet was 3.4 g/cm³.

### Example 11

This example was basically the same as Example 8, and the only differences were that the volume average particle diameter Dᵥ50 of the positive electrode active material of polycrystalline particles was 5 µm; and the compacted density of the positive electrode sheet was 3.6 g/cm³.

### Example 12

This example was basically the same as Example 8, and the only differences were that the volume average particle diameter Dᵥ50 of the positive electrode active material of polycrystalline particles was 15 µm; and the compacted density of the positive electrode sheet was 3.6 g/cm³.

### Example 13

This example was basically the same as Example 3, and the only differences were that the negative electrode active material further included a silicon-oxygen material; a chemical formula of the silicon-oxygen material was SiO_{y}, where 0.5<y<1.5; the volume average particle diameter Dᵥ50 of the silicon-oxygen material was 7.7 µm, the volume average particle diameter Dᵥ10 was 4.2 µm, and the specific surface area was 2.04 m²; based on the total mass of the negative electrode active material, the mass percentage of the silicon-based material was 1%; accordingly, the negative electrode areal density was 13 mg/cm².

### Example 14

This example was basically the same as Example 13, and the only differences were that based on the total mass of the negative electrode active material, the mass percentage of the silicon-based material was 10%; accordingly, the negative electrode areal density was 9 mg/cm².

### Example 15

This example was basically the same as Example 13, and the only differences were that based on the total mass of the negative electrode active material, the mass percentage of the silicon-based material was 15%; accordingly, the negative electrode areal density was 7 mg/cm².

### Example 16

This example was basically the same as Example 14, and the only differences were that the silicon-based material was pre-lithiated silicon-oxygen particles, and a chemical formula of the pre-lithiated silicon-oxygen particles was nSi·mLi₂SiO₃, where n and m were both positive numbers, and 0.8<n/m<1.2; a diameter of the single-crystal silicon in the pre-lithiated silicon-oxygen particles was 5 nm; and a volume percentage of the single-crystal silicon in the pre-lithiated silicon-oxygen particles was 20%; accordingly, the negative electrode areal density was 7 mg/cm².

### Example 17

This example was basically the same as Example 14, and the differences were that the silicon-oxygen material was pre-lithiated silicon-oxygen particles, the diameter of the single-crystal silicon in the pre-lithiated silicon-oxygen particles was 25 nm, and the volume percentage of the single-crystal silicon in the pre-lithiated silicon-oxygen particles was 30%; accordingly, the negative electrode areal density was 7 mg/cm².

### Example 18

This example was basically the same as Example 14, and the only differences were that the silicon-oxygen material was pre-lithiated silicon-oxygen particles, the diameter of the single-crystal silicon in the pre-lithiated silicon-oxygen particles was 50 nm, and the volume percentage of the single-crystal silicon in the pre-lithiated silicon-oxygen particles was 40%; accordingly, the negative electrode areal density was 7 mg/cm².

### Comparative example 1

This comparative example was basically the same as Example 3, and the only difference was that the chemical formula of the positive electrode active material was Li_{1.02}(Ni_{0.50}Co_{0.25}Mn_{0.25})_{0.98}O₂, where a=0.5.

### Comparative example 2

This comparative example was basically the same as Example 1, and the only difference was that an equal amount of natural graphite replaced artificial graphite in Example 1 as the negative electrode active material.

### Comparative example 3

This comparative example was basically the same as Example 1, and the only difference was that the graphitization degree of the artificial graphite of the negative electrode active material was 88%.

### II. Test method

### (1) Calculation of areal density and compacted density

A double-sided positive/negative electrode sheet of a disassembled cell was first centrifuged to remove an electrolyte solution; then dried at 120°C for 2 h; cut by a punching machine to obtain an electrode with an area of S mm²; then weighed, where a weight was recorded as W1 g; and after weighing, soaked in water/ethanol solution to remove film layers on two sides of a current collector. After drying, the current collector was weighed, and a weight was recorded as W2 g.

Single-side areal density=(W1-W2)/2S, with units of g/mm².

Compacted density=areal density/(compacted electrode sheet thickness-current collector thickness).

### (2) Test of volume average particle diameters Dᵥ50 and Dᵥ10

The particle diameters were tested with a laser particle size analyzer.

### Pre-treatment

1. A 0% SOC cell was disassembled. Surface powder was scraped off from an appropriate amount of negative electrode sheet; first soaked in dimethyl carbonate (DMC) for 24 h; and then dried in an oven at 60°C for 4 h. The dried negative electrode sheet was placed in a tube furnace and calcined at 550°C for 6 h under argon protection, to obtain a graphite sample with the binder removed.
2. An appropriate amount of the treated sample was added into a clean beaker, and a dispersant was added. Ultrasonication at 120 W/5 min was performed to ensure complete dispersion of the sample in the dispersant.

Test: After the sample was poured into a sample unit, it was circulated with the solution to a test optical path system. Through reception and measurement of an energy distribution of scattered light of laser beam irradiation on particles, particle size distribution characteristics of the particles (obscuration: 8% to 12%) were obtained.

Herein, Dᵥ50 represented a particle diameter in a particle size distribution where 50% of the total volume of particles had a diameter smaller than this value; and Dᵥ10 represented a particle diameter in a particle size distribution where 10% of the total volume of particles had a diameter smaller than this value.

### (3) Test of type and content of silicon-based material in negative electrode active material

1. A silicon type was determined by SEM&EDS
   Morphology analysis of ion-polished cross-sections was performed with a scanning electron microscopy. The equipment was set to backscattered mode to show morphologies and sizes of silicon particles. Whether the silicon particles were silicon-carbon or silicon-oxygen was determined with EDS.
2. A silicon content in an electrode sheet was determined by using ashing method.

A sample was burned in oxygen to convert carbon, sulfur, and other substances into CO₂, SO₂, and the like, which entered an absorption cell and were converted into corresponding signals by a detector. The signals were sampled by a computer, and after linear correction, the signals were converted into values proportional to concentrations of CO₂ and SO₂. Values obtained during the entire analysis were then accumulated. After the analysis, the cumulative value was divided by the weight values in the computer, then multiplied by correction factors, and a blank value was subtracted, to obtain the percentages of carbon, sulfur, and other substances in the sample. A remaining substance after combustion was weighed, and then the remaining substance was fully soaked in saturated sodium hydroxide. The diluted solution was tested with ICP to determine the silicon content, and then the actual weight percentage was calculated based on the silicon type.

### (4) Test of single-crystal silicon diameter and volume percentage

1. a. Sample preparation: A sample preparation glue (PVDF was dispersed in NMP in advance, where PVDF content was about 8%) was mixed uniformly with pre-lithiated silicon-oxygen particles (a particle weight is about 5 times that of the glue) and applied to a copper foil (6 µm), and dried at 60°C for 30 min for later use. b. The sample was cut into a size of 6 mm*6 mm with a scissor and pasted on a sample stage of a CP (argon ion polisher), with the sample protruding no more than 1mm from the sample stage; c. Cutting was performed at a voltage of 7.5 KV (balance between efficiency and quality) for 30 min (the time can be adjusted appropriately based on material and sample thickness).
2. Parameter settings: Parameters of the scanning electron microscope were set as follows: mode: BSD; voltage: 20 KV; aperture: 60 µm; working distance: 6 mm; "High current" checked; noise reduction mode N=50.
3. Test process: The scanning electron microscope was used for test. A medium or large particle was selected, and the interior was focused in In-lens mode. Then the microscope was switched to BSD mode, and the particle was photographed at about 5K (the entire particle should be in the field of view). The diameter of the single-crystal silicon particle was read by software and the volume percentage of the single-crystal silicon was calculated.

### (5) Test of specific surface area

1. Pre-treatment: An appropriate amount of sample was loaded into a dedicated sample tube; heated and evacuated for degassing for 2 h; and weighed after cooling to room temperature. A sample mass was obtained by subtracting a mass of the sample tube.
2. Test: The sample tube was loaded into an analysis station, and under a liquid nitrogen insulation condition (-196°C), gas adsorption amounts on a solid surface at different adsorption pressures were measured, and based on the BET multi-layer adsorption theory and its formula, a single molecular layer adsorption amount of the sample was obtained, and then a specific surface area of the solid sample per unit mass was obtained.

Adsorption gas was nitrogen, adsorption pressures are 0.05 MPa/0.10 MPa/0.15 MPa/0.20 MPa/0.25 MPa/0.30 MPa, and test atmosphere was high-purity liquid nitrogen atmosphere.

### (6) Test method for SOH after 800 cycles at 45°C and test method for large surface pressure after 1500 cycles

A fresh cell was clamped by three steel clamps, and a Cooperation pressure sensor was mounted to monitor a swelling force, with a preload force of 3000 N.

The cycling process was as follows.

Constant current charge at 1.2C rate to 3.76 V; constant current charge at 0.87C rate to 4.08 V; constant current charge at 0.33C rate to 4.2 V followed by constant voltage charge to 0.05C current; standing for 10 min; constant voltage discharge at 1C rate to 2.8 V; and standing for 10 min.

The above steps were repeated. When the cell cycling reached 800 cycles, a SOH retention rate of the cell after 800 cycles was read. When the cell cycling reached 1500 cycles, a large surface pressure was calculated.

Large surface pressure=swelling force/force-bearing area of positive electrode large surface. For example, the measured swelling force was, the size of the positive electrode large surface was 100 mm (height)*150 mm (width), the force-bearing area of the positive electrode large surface was 80 mm (height)*135 mm (width), and in this case, swelling force surface pressure=2400 kgf*10/(80*135) mm²=2.22 MPa.

### (7) Energy density calculation

A cell shell had a thickness of 33 mm, a width of 220 mm, a shell height of 102.5 mm.

Volume energy density of cell=initial cell capacity*platform voltage/cell volume, with units of Wh/L.

### (8) Test method for battery capacity

One cell was used for test. A design capacity C1 was queried. The cell was discharged at a constant current of 0.33C1 rate to 2.8 V; left standing for 10 min; charged at a constant current of 0.33C1 rate to a design battery voltage ( 4.25 V in this test); charged at a constant voltage of 4.25 V to 0.05C1; left standing for 10 min; and discharged at a constant current of 0.33C1 rate to 2.8 V. An obtained capacity was the cell capacity C0.

The parameters and performance data of the secondary batteries in the above examples and comparative examples are shown in Table 1, Table 2, Table 3, and Table 4.

**Table 1**

| Item | Example 1 | Example 2 | Example 3 | Example 4 | Example 5 | Example 6 |
|---|---|---|---|---|---|---|
| Molar amount a in positive electrode active material | 0.75 | 0.85 | 0.9 | 0.95 | 0.9 | 0.9 |
| Single-crystal particle content (%) | 100 | 100 | 100 | 100 | 100 | 100 |
| Polycrystalline particle content (%) | 0 | 0 | 0 | 0 | 0 | 0 |
| Single-crystal particle Dᵥ50 (µm) | 2.5 | 2.5 | 2.5 | 2.5 | 1 | 5 |
| Polycrystalline particle Dᵥ50 (µm) | / | / | / | / | / | / |
| Positive electrode compacted density (g/cm³) | 3.3 | 3.3 | 3.3 | 3.3 | 3.3 | 3.5 |
| Positive electrode areal density (mg/cm²) | 20 | 20 | 20 | 20 | 20 | 20 |
| Graphite type | Artificial graphite | Artificial graphite | Artificial graphite | Artificial graphite | Artificial graphite | Artificial graphite |
| Graphitization degree (%) | 94 | 94 | 94 | 94 | 94 | 94 |
| Negative electrode areal density (mg/cm²) | 12 | 13 | 14 | 15 | 14 | 14 |
| Silicon-based material type | / | / | / | / | / | / |
| Silicon-based material content (%) | 0 | 0 | 0 | 0 | 0 | 0 |
| Silicon-based material Dᵥ50 (µm) | / | / | / | / | / | / |
| Diameter of single-crystal silicon in pre-lithiated silicon-oxygen particles (nm) | / | / | / | / | / | / |
| Volume percentage of single-crystal silicon in pre-lithiated silicon-oxygen particles (%) | / | / | / | / | / | / |
| Electrolyte solution amount (g/Ah) | 1.7 | 1.7 | 1.7 | 1.7 | 1.7 | 1.7 |
| Cycling performance at 45°C (800 cycles SOH) | 84.0% | 85.0% | 87.0% | 86.0% | 73.0% | 88.0% |
| Large surface pressure after 1500 cycles (MPa) | 1.42 | 1.45 | 1.49 | 1.53 | 1.69 | 1.36 |
| Energy density (Wh/L) | 575 | 590 | 650 | 685 | 650 | 657 |

**Table 2**

| Item | Example 7 | Example 8 | Example 9 | Example 10 | Example 11 | Example 12 |
|---|---|---|---|---|---|---|
| Molar amount a in positive electrode active material | 0.9 | 0.9 | 0.9 | 0.9 | 0.9 | 0.9 |
| Single-crystal particle content (%) | 100 | 80 | 50 | 20 | 80 | 80 |
| Polycrystalline particle content (%) | 0 | 20 | 50 | 80 | 20 | 20 |
| Single-crystal particle Dᵥ50 (µm) | 2.5 | 2.5 | 2.5 | 2.5 | 2.5 | 2.5 |
| Polycrystalline particle Dᵥ50 (µm) | / | 10 | 10 | 10 | 5 | 15 |
| Positive electrode compacted density (g/cm³) | 2.8 | 3.6 | 3.5 | 3.4 | 3.6 | 3.6 |
| Positive electrode areal density (mg/cm²) | 20 | 20 | 20 | 20 | 20 | 20 |
| Graphite type | Artificial graphite | Artificial graphite | Artificial graphite | Artificial graphite | Artificial graphite | Artificial graphite |
| Graphitization degree (%) | 94 | 94 | 94 | 94 | 94 | 94 |
| Negative electrode areal density (mg/cm²) | 14 | 14 | 14 | 14 | 14 | 14 |
| Silicon-based material type | / | / | / | / | / | / |
| Silicon-based material content (%) | 0 | 0 | 0 | 0 | 0 | 0 |
| Silicon-based material Dᵥ50 (µm) | / | / | / | / | / | / |
| Diameter of single-crystal silicon in pre-lithiated silicon oxygen particles (nm) | / | / | / | / | / | / |
| Volume percentage of single-crystal silicon in pre-lithiated silicon oxygen particles (%) | / | / | / | / | / | / |
| Electrolyte solution amount (g/Ah) | 1.7 | 1.7 | 1.7 | 1.7 | 1.7 | 1.7 |
| Cycling performance at 45°C (800 cycles SOH) | 91.0% | 84.0% | 85.0% | 85.0% | 79.0% | 85.0% |
| Large surface pressure after 1500 cycles (MPa) | 1.32 | 1.62 | 1.58 | 1.45 | 1.67 | 1.48 |
| Energy density (Wh/L) | 629 | 667 | 662 | 654 | 667 | 667 |

**Table 3**

| Item | Example 13 | Example 14 | Example 15 | Example 16 | Example 17 |
|---|---|---|---|---|---|
| Molar amount a in positive electrode active material | 0.9 | 0.9 | 0.9 | 0.9 | 0.9 |
| Single-crystal particle content (%) | 100 | 100 | 100 | 100 | 100 |
| Polycrystalline particle content (%) | 0 | 0 | 0 | 0 | 0 |
| Single-crystal particle Dᵥ50 (µm) | 2.5 | 2.5 | 2.5 | 2.5 | 2.5 |
| Polycrystalline particle Dᵥ50 (µm) | / | / | / | / | / |
| Positive electrode compacted density (g/cm³) | 3.6 | 3.3 | 3.3 | 3.3 | 3.3 |
| Positive electrode areal density (mg/cm²) | 20 | 20 | 20 | 20 | 20 |
| Graphite type | Artificial graphite | Artificial graphite | Artificial graphite | Artificial graphite | Artificial graphite |
| Graphitization degree (%) | 94 | 94 | 94 | 94 | 94 |
| Negative electrode areal density (mg/cm²) | 13 | 9 | 7 | 7 | 7 |
| Silicon-based material type | Silicon-oxygen material | Silicon-oxygen material | Silicon-oxygen material | Pre-lithiated silicon-oxygen material | Pre-lithiated silicon-oxygen material |
| Silicon-based material content (%) | 1 | 10 | 15 | 10 | 10 |
| Silicon-based material Dᵥ50 (µm) | 7.7 | 7.7 | 7.7 | 7.7 | 7.7 |
| Diameter of single-crystal silicon in pre-lithiated silicon-oxygen particles (nm) | / | / | / | 5 | 25 |
| Volume percentage of single-crystal silicon in pre-lithiated silicon oxygen particles (%) | / | / | / | 20 | 30 |
| Electrolyte solution amount (g/Ah) | 1.7 | 1.7 | 1.7 | 1.7 | 1.7 |
| Cycling performance at 45°C (800 cycles SOH) | 87.0% | 83.0% | 81.0% | 83.0% | 87.0% |
| Large surface pressure after 1500 cycles (MPa) | 1.49 | 1.79 | 1.93 | 1.81 | 1.67 |
| Energy density (Wh/L) | 655 | 686 | 705 | 705 | 710 |

**Table 4**

| Item | Example 18 | Comparative example 1 | Comparative example 2 | Comparative example 3 |
|---|---|---|---|---|
| Molar amount a in positive electrode active material | 0.9 | 0.5 | 0.75 | 0.75 |
| Single-crystal particle content (%) | 100 | 100 | 100 | 100 |
| Polycrystalline particle content (%) | 0 | 0 | 0 | 0 |
| Single-crystal particle Dᵥ50 (µm) | 2.5 | 2.5 | 2.5 | 2.5 |
| Polycrystalline particle Dᵥ50 (µm) | / | / | / | / |
| Positive electrode compacted density (g/cm³) | 3.3 | 3.3 | 3.3 | 3.3 |
| Positive electrode areal density (mg/cm²) | 20 | 20 | 20 | 20 |
| Graphite type | Artificial graphite | Artificial graphite | Natural graphite | Artificial graphite |
| Graphitization degree (%) | 94 | 94 | 94 | 94 |
| Negative electrode areal density (mg/cm²) | 7 | 14 | 12 | 12 |
| Silicon-based material type | Pre-lithiated silicon-oxygen | / | / | / |
| Silicon-based material content (%) | 10 | 0 | 0 | 0 |
| Silicon-based material Dᵥ50 (um) | 7.7 | / | / | / |
| Diameter of single-crystal silicon in pre-lithiated silicon oxygen particles (nm) | 50 | / | / | / |
| Volume percentage of single-crystal silicon in pre-lithiated silicon oxygen particles (%) | 40 | / | / | / |
| Electrolyte solution amount (g/Ah) | 1.7 | 1.7 | 1.7 | 1.7 |
| Cycling performance at 45°C (800 cycles SOH) | 79.0% | 75% (with accelerated capacity decay) | 71% | 74% |
| Large surface pressure after 1500 cycles (MPa) | 2.19 | 2.24 | 1.89 | 1.66 |
| Energy density (Wh/L) | 715 | 555 | 578 | 560 |

From the data in the above tables, the following can be learned.

The secondary batteries in the examples of this application generate a small swelling force, exhibit good cycling performance, and have high energy density, exhibiting excellent comprehensive performance.

Through comparison of Examples 1 to 4, it can be learned that as the Ni content in the positive electrode active material increases, the discharge specific capacity of the positive electrode active material increases accordingly. Therefore, using a positive electrode active material with higher Ni content (for example, a is 0.9 to 0.95) can significantly improve the energy density of the battery.

Through comparison of Example 3 and Examples 5 to 7, it can be learned that as the particle diameter of the positive electrode active material of single-crystal particles decreases, the compacted capacity of the positive electrode active material decreases, and with the same compacted density, the cycling performance of the battery declines. Within the compacted capacity range of the positive electrode active material, reducing the compacted density of the positive electrode sheet affects the energy density of the battery, although the battery cycling performance can be improved. Therefore, an appropriate compacted density can be determined based on the particle diameter of the material of single-crystal particles to achieve better comprehensive performance.

Through comparison of Example 3 and Examples 8 to 10, it can be learned that blending a certain amount of single-crystal particles and polycrystalline particles in the positive electrode active material can improve the compacted density of the positive electrode sheet, thereby improving the energy density of the battery, without significant deterioration in the cycling performance and increase in the swelling force of the battery.

Through comparison of Example 3 and Examples 13 to 15, it can be learned that incorporating a certain amount of silicon-based material into the negative electrode active material can effectively improve the energy density of the battery, but the addition amount of the silicon-based material needs to be controlled within a certain range to alleviate the deterioration in the battery cycling performance caused by the addition of the silicon-based material. Controlling the content of the silicon-based material in the negative electrode active material within 1% to 15% can effectively improve the energy density of the battery and ensure that the battery has good cycling performance.

Through comparison of Example 14 and Examples 16 to 18, it can be learned that using specific pre-lithiated silicon-oxygen particles can further improve the energy density of the battery and optimize the cycling performance of the battery to a certain extent.

Through comparison of Example 3 and Comparative example 1, it can be learned that when the Ni content in the positive electrode active material is excessively low, the lattice contraction of the positive electrode active material during charge is insignificant, and the swelling force of the battery is large. Since the positive electrode sheet is sensitive to the swelling force of the battery during charge, cycling performance of the battery is significantly deteriorated, and the energy density of the battery is also significantly reduced.

Through comparison of Example 1 and Comparative example 2, it can be learned that when an equal amount of natural graphite replaces artificial graphite as the negative electrode active material, the swelling force of the battery increases significantly after cycling, and the cycling performance of the battery deteriorates significantly. Through comparison of Example 1 and Comparative example 3, it can be learned that when the graphitization degree of artificial graphite is reduced to below 93%, the swelling force of the battery also increases significantly after cycling, the cycling performance of the battery deteriorates significantly, and the energy density decreases.

The above descriptions of various embodiments tend to emphasize the differences between the embodiments, and their identical or similar aspects can be cross-referenced. For brevity, they are not repeated herein.

It should be noted that this application is not limited to the above embodiments. The above embodiments are only examples, and embodiments that have substantially the same composition as the technical idea and achieve the same effects within the scope of the technical solution of this application are all included in the technical scope of this application. In addition, within the scope not departing from the gist of this application, various modifications to the embodiments that can be conceived by those skilled in the art, and other methods constructed by combining some constituent elements of the embodiments are also included in the scope of this application.

## Claims

1. A secondary battery, comprising a negative electrode sheet and a positive electrode sheet; wherein
the negative electrode sheet comprises a negative electrode film layer, the negative electrode film layer comprises a negative electrode active material, and the negative electrode active material comprises artificial graphite with a graphitization degree greater than 93%;
the positive electrode sheet comprises a positive electrode film layer; the positive electrode film layer comprises a positive electrode active material with a morphology of single-crystal particles; and with a total molar amount of nickel element, cobalt element, and manganese element in a chemical formula of the positive electrode active material being 1, a molar amount of nickel element in the chemical formula of the positive electrode active material is a, and a is 0.6 to 1; and
an areal density of the negative electrode film layer is σ1, an areal density of the positive electrode film layer is σ2, and σ1/σ2 is 0.35 to 0.75.

2. The secondary battery according to claim 1, wherein 0.9≤a≤0.95.

3. The secondary battery according to claim 1 or 2, wherein based on a total mass of the positive electrode active material, a mass percentage of the single-crystal particles is greater than or equal to 80%.

4. The secondary battery according to any one of claims 1 to 3, wherein based on the total mass of the positive electrode active material, a mass percentage of the single-crystal particles is 100%.

5. The secondary battery according to any one of claims 1 to 4, wherein a volume average particle diameter Dᵥ50 of the single-crystal particles is 1 µm to 5 µm.

6. The secondary battery according to any one of claims 1 to 5, wherein the positive electrode active material further comprises a positive electrode active material with a morphology of polycrystalline particles, and a volume average particle diameter Dᵥ50 of the polycrystalline particles is 5 µm to 15 µm.

7. The secondary battery according to claim 6, wherein based on the total mass of the positive electrode active material, a mass percentage of the polycrystalline particles is less than or equal to 80%.

8. The secondary battery according to any one of claims 1 to 7, wherein the areal density σ2 of the positive electrode film layer is greater than 13 mg/cm².

9. The secondary battery according to any one of claims 1 to 8, wherein the negative electrode active material further comprises a silicon-based material; and based on a total mass of the negative electrode active material, a mass percentage of the silicon-based material is 1% to 15%.

10. The secondary battery according to claim 9, wherein the silicon-based material comprises a silicon-oxygen material, and a general formula of the silicon-oxygen material is SiO_{y}, wherein 0.5<y<1.5.

11. The secondary battery according to claim 9 or 10, wherein the silicon-based material comprises pre-lithiated silicon-oxygen particles, and the pre-lithiated silicon-oxygen particles comprise single-crystal silicon.

12. The secondary battery according to claim 11, wherein a diameter of the single-crystal silicon is 0.5 nm to 50 nm.

13. The secondary battery according to claim 11 or 12, wherein based on a volume of the pre-lithiated silicon-oxygen particles, a volume percentage of the single-crystal silicon in the pre-lithiated silicon-oxygen particles is 20% to 40%.

14. The secondary battery according to any one of claims 1 to 13, wherein the secondary battery further comprises an electrolyte solution, and a ratio of a mass of the electrolyte solution to a capacity of the secondary battery is 1.5 g/Ah to 1.9 g/Ah.

15. The secondary battery according to any one of claims 1 to 14, wherein the secondary battery is a stacked battery.

16. An electric device, comprising the secondary battery according to any one of claims 1 to 15.
